# EUROPEAN PATENT APPLICATION

(11) **EP 4 831 210 A1**
(43) Date of publication of application: **28.10.2026**
(21) Application number: 24907192.9
(22) Date of filing: 06.12.2024
(51) Int. Cl.: C08F 2/44, C08F 290/06

(54) **CURABLE COMPOSITION, CURED BODY, OPTICAL ARTICLE, LENS, RUBBER SHEET, EYE PROTECTOR, ANTIBACTERIAL/ANTIVIRAL AGENT, AND RESIN COMPOSITION**

(30) Priority: 20.12.2023 JP 2023214923
(71) Applicant: TOKUYAMA CORPORATION, Yamaguchi 745-8648 (JP)
(72) Inventor: MARUMOTO, Hayato, Shunan-shi, Yamaguchi 745-8648 (JP); KAWASAKI, Takayoshi, Shunan-shi, Yamaguchi 745-8648 (JP); SHIINE, Tsubasa, Shunan-shi, Yamaguchi 745-8648 (JP)
(74) Representative: Kraus & Lederer PartGmbB
(86) International application number: PCT/JP2024/043160
(87) International publication number: WO 2025/134806

(57) **Abstract**

Provided is a curable composition comprising a first bismuth compound having bismuth and at least one of an acryloyl group and a methacryloyl group, and a first radical polymerizable monomer which has a polyethylene glycol chain and in which the ratio N2/N1 of the number average molecular weight N2 of the polyethylene glycol chain to the number average molecular weight N1 is 75-95%, wherein the percentage of the polyethylene glycol chain is 13.5 mass% or more in the composition. Also provided are: a cured body of the curable composition; and an optical article, a lens, a rubber sheet, an eye protector, and an antibacterial/antiviral agent each containing the cured body.

## Description

### TECHNICAL FIELD

The present disclosure relates to a curable composition, a cured product, an optical article, a lens, a rubber sheet, an eye protector, an antibacterial or antiviral agent, and a resin composition.

### BACKGROUND ART

Lead glass or acrylic lead has been used as a radiation protection material to protect the eye from radiation. However, lead is harmful to the environment and human health, and there is a strong demand for lead-free alternatives. As the alternatives, curable compositions containing bismuth compounds in which phosphate esters having (meth)acryloyl groups are bonded to bismuth have been studied and developed.

### Citation List

### Patent Documents

Patent Document 1: PCT International Publication No. WO2022/014591
Patent Document 2: PCT International Publication No. WO2019/177084

### DISCLOSURE OF THE INVENTION

### Problems to be Solved by the Invention

An object of the present disclosure is to provide a curable composition capable of providing a resin composition with an antifogging property, a cured product, an optical article, a lens, a rubber sheet, an eye protector, and an antibacterial or antiviral agent.

### Means for Solving the Problems

According to the present disclosure, a curable composition is provided. The curable composition contains a first bismuth compound and a first radically polymerizable monomer. The first bismuth compound includes bismuth and at least one selected from the group consisting of an acryloyl group and a methacryloyl group. The first radically polymerizable monomer has a polyethylene glycol chain. A ratio N2/N1 of a number average molecular weight N2 of the polyethylene glycol chain to a number average molecular weight N1 of the first radically polymerizable monomer is 75% or more and 95% or less. The curable composition includes 13.5 mass% or more of the polyethylene glycol chain.

According to the present disclosure, a cured product is provided. The cured product is a cured product including a product resulting from curing of the curable composition of the present disclosure.

According to the present disclosure, an optical article is provided. The optical article includes a cured product of the present disclosure.

According to the present disclosure, a lens is provided. The lens includes a cured product of the present disclosure.

According to the present disclosure, a rubber sheet is provided. The rubber sheet includes a cured product of the present disclosure.

According to the present disclosure, an eye protector is provided. The eye protector includes a cured product of the present disclosure.

According to the present disclosure, an antibacterial or antiviral agent is provided. The antibacterial or antiviral agent includes a cured product of the present disclosure.

According to the present disclosure, a resin composition is provided. The resin composition includes bismuth, a (meth)acrylic resin, and 16.0 mass% or more of a polyethylene glycol chain.

### Effects of the Invention

The present disclosure provides a curable composition capable of providing a resin composition with an antifogging property, a cured product, an optical article, a lens, a rubber sheet, an eye protector, and an antibacterial or antiviral agent.

### PREFERRED MODE FOR CARRYING OUT THE INVENTION

In addition to a radiation protective capability, an optical property such as high transparency or surface smoothness is required for a radiation protective material for eye protection. For example, a molded product of a radiation protective material for eye protection, such as eyeglasses or goggles, may be used in the vicinity of the human eye, so lenses thereof may fog up due to human exhalation, etc., and their transparency may be reduced. Therefore, there is a need for a radiation protective material with an antifogging property.

According to the present disclosure, a curable composition is provided. The curable composition contains a first bismuth compound and a first radically polymerizable monomer. The first bismuth compound includes bismuth and at least one selected from the group consisting of an acryloyl group and a methacryloyl group. The first radically polymerizable monomer has a polyethylene glycol chain. A ratio N2/N1 of a number average molecular weight N2 of the polyethylene glycol chain to a number average molecular weight N1 of the first radically polymerizable monomer is 75% or more and 95% or less. The curable composition includes 13.5 mass% or more of the polyethylene glycol chain.

The curable composition of the present disclosure can be used to provide a resin composition with an antifogging property. In other words, the curable composition includes a first radically polymerizable monomer in which a polyethylene glycol chain constitutes the majority of a molecular weight, and includes a certain amount or more of a polyethylene glycol chain. For a cured product of such a curable composition, it is believed that a hydrophilic interface is formed on a surface of the cured product since the polyethylene glycol chain, which is hydrophilic, has relatively high free energy.

Hereinafter, each of components that may be used for the curable composition of the present disclosure will be described. Regarding each type of component described below, the curable composition may contain one component of any one type or a combination of two or more components of any one type. It should be noted that the term "(meth)acryloyl" as used herein means both "acryloyl" and "methacryloyl". The same applies to similar terms such as "(meth)acrylate" and "(meth)acrylic resin".

### <First Bismuth Compound>

The first bismuth compound includes bismuth and at least one selected from the group consisting of an acryloyl group and a methacryloyl group. The first bismuth compound, which includes bismuth, is useful as a radiation shielding material. The term "radiation" includes electromagnetic radiation and particle radiation. The term "electromagnetic radiation" includes X-rays and γ rays. The term "particle radiation" includes α rays, β rays, neutron rays, and proton beams. The first bismuth compound has high X-ray shielding performance and is particularly suitable for use as an X-ray shielding material or as a material for shielding β rays, which can produce X-rays.

The first bismuth compound has high solubility in a radically polymerizable compound having at least one radically polymerizable group selected from the group consisting of a nitrile group, an acryloyl group, a methacryloyl group, a vinyl group, and an allyl group. Therefore, using the first bismuth compound makes it possible to obtain a curable composition with a high bismuth content and to obtain a cured product with a high bismuth content. The first bismuth compound has higher solubility in a radically polymerizable compound than bismuth subsalicylate alone.

The first bismuth compound may be any type of compound including bismuth and a (meth)acryloyl group. In the compound, for example, bismuth may be bonded to the (meth)acryloyl group directly or via a linking group. The linking group may include, for example, an oxygen atom, a sulfur atom, a nitrogen atom, or a phosphate group.

The first bismuth compound preferably further has a phosphate bond. The first bismuth compound more preferably includes bismuth and a (meth)acryloyl group-containing first phosphate ester moiety bonded to bismuth. Such a first bismuth compound tends to be more compatible with various polymerizable compounds. The first phosphate ester moiety and bismuth may be bonded through any type of bonding, such as ionic bonding, coordination bonding, or covalent bonding. Specifically, the first bismuth compound may be a phosphate or complex salt including a bismuth cation (Bi³⁺ or Bi⁵⁺) and a first phosphate ester anion, or may be a phosphorylated compound or complex.

The first bismuth compound may be a mono(meth)acrylate having one (meth)acryloyl group, a di(meth)acrylate having two (meth)acryloyl groups, a tri(meth)acrylate having three (meth)acryloyl groups, or a polyfunctional (meth)acrylate having four or more (meth)acryloyl groups.

The first bismuth compound may include, for example, a first phosphate ester moiety represented by Formula (2) below.

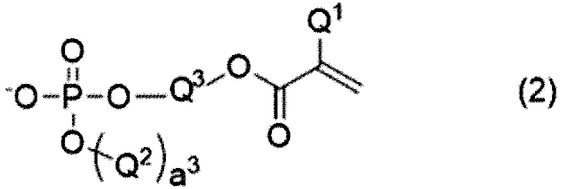

In Formula (2), Q¹ is a hydrogen atom or a methyl group. Q¹ is preferably a methyl group.

In Formula (2), Q² is a hydrogen atom, a linear or branched alkyl group having 1 or more and 10 or less carbon atoms, an aryl group having 4 or more and 16 or less carbon atoms, or a (meth)acryloyloxyalkyl group. The alkyl group preferably has 1 or more and 6 or less carbon atoms. The aryl group preferably has 5 or more and 8 or less carbon atoms. The aryl group is preferably a phenyl group. An alkyl moiety included in the (meth)acryloyloxyalkyl group has, for example, 1 or more and 10 or less carbon atoms, preferably 1 or more and 3 or less carbon atoms. The (meth)acryloyloxyalkyl group is preferably a (meth)acryloyloxyethyl group.

In Formula (2), a³ is 0 or 1. When a³ is 0, the oxygen atom bonded to Q² is in the form of O-.

In Formula (2), Q³ is a linear or branched alkylene group having 1 or more and 10 or less carbon atoms or a linear or branched alkyleneoxyalkylene group having 2 or more and 10 or less carbon atoms.

The first bismuth compound may further include an additional compound moiety bonded to bismuth in addition to the first phosphate ester moiety. Bismuth and the additional compound moiety may be bonded through any of ionic bonding, coordination bonding, or covalent bonding. Specifically, the first bismuth compound may be a phosphate or complex salt including a bismuth cation (Bi³⁺ or Bi⁵⁺), a first phosphate ester anion, and an additional compound moiety anion, or may be a phosphorylated compound or complex.

Examples of the additional compound include at least one selected from the group consisting of salicylic acid and (meth)acrylic acid.

To have improved solubility in a radically polymerizable compound, the first bismuth compound preferably has a molar ratio of the additional compound moiety to the first phosphate ester moiety of 0.1 to 10, more preferably 0.1 to 5, even more preferably 0.1 to 1, furthermore preferably 0.1 to 0.5. The first bismuth compound may include two or more first phosphate ester moieties. In such a case, the above molar ratio range is based on the total number of moles of the first phosphate ester moieties.

The bonding between the first phosphate ester moiety and bismuth can be confirmed by infrared (IR) spectroscopy. Specifically, the first bismuth compound may be determined to have bonding between the first phosphate ester moiety and bismuth when the infrared spectroscopy of the first bismuth compound shows a peak at 1670-1700 cm⁻¹. This peak is considered characteristic of stretching vibration in Bi-O-P. This peak is not observed in bismuth or the first phosphate ester before they are bonded together. This peak is also not observed in a mixture of the first phosphate ester and a second bismuth compound, which can be used as a raw material for the first bismuth compound as described below.

For example, the IR spectrum may be measured using Spectrum One manufactured by PerkinElmer under the conditions of single reflection ATR and a number of scans of 4.

In addition, the number of bonded salicylic or (meth)acrylic acid moieties and the number of bonded phosphate ester moieties of each type in the first bismuth compound can be determined by a combination of NMR (nuclear magnetic resonance spectroscopy), MALDI-TOF-MS (matrix-assisted laser desorption ionization time-of-flight mass spectrometry), XPS (X-ray photoelectron spectroscopy), and EDS (energy dispersive X-ray spectroscopy) for elemental analysis and so on.

¹H-NMR and ³¹P-NMR measurements may be performed using a nuclear magnetic resonance spectrometer (JNM-ECA400II manufactured by JEOL), deuterated acetone (solvent), and a sample concentration of 1 mass%.

XPS measurement may be performed using an X-ray photoelectron spectrometer (ESCA5701ci/MC manufactured by ULVAC-PHI), a monochromatized Al-Kα X-ray source (14 kV-330W), an aperture diameter of φ800 µm, and a photoelectron extraction angle of 45 degrees. The sample may be crushed in an agate mortar, and the resulting powder may be fixed to a substrate with a carbon tape and then introduced into the chamber for measurement.

The first bismuth compound preferably further has a phenyl group. The first bismuth compound having a phenyl group tends to have high compatibility with a radically polymerizable monomer. The presence of a phenyl group in the first bismuth compound can be confirmed, for example, by FT-IR (Fourier transform infrared spectroscopy).

The first bismuth compound may be, for example, a phosphate or complex salt represented by Formula (1) below.

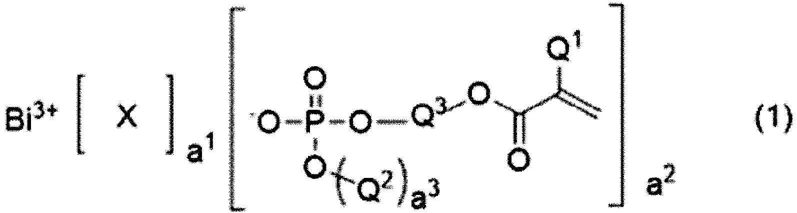

In Formula (1), Q¹, Q², Q³, and a³ are the same as in Formula (2).

In Formula (1), X is a (meth)acrylic acid moiety represented by Formula (1a) below or a salicylic acid moiety represented by Formula (1b) below. In Formula (1a), R is a hydrogen atom or a methyl group. X is preferably a salicylic acid moiety represented by Formula (1b).

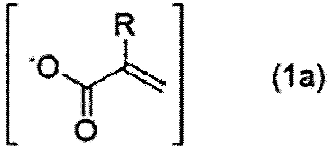

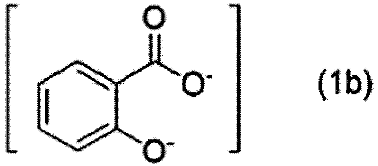

In Formula (1), a¹ is a number of 0 or more and 1 or less, a² is a number of 0.1 or more and 3 or less, and a¹ + a² is a number of 2 or more and 3 or less.

Whether the first bismuth compound has the structure of Formula (1) may be confirmed by detecting the protonated molecular ion or sodium adduct molecular ion of the compound in MALDI-TOF-MS measurement. For example, a protonated molecular ion with an m/z of 667 can be detected in the measurement of the first bismuth compound of Formula (1) with a¹ being a number of 0 or more and 1 or less, X being a salicylic acid moiety, a² being a number of 1 or more and 3 or less, Q¹ being a methyl group, Q² being a methacryloyloxyalkyl group, and Q³ being a linear alkylene group having 2 carbon atoms.

The MALDI-TOF-MS measurement may be performed using a Bruker rapiflex TOF/TOF instrument; a matrix of CHCA (α-cyano-4-hydroxycinnamic acid), DIT (dithranol), and DHB (2,5-dihydroxybenzoic acid); and sodium trifluoroacetate (cationizing agent). The measurement may be performed in the reflector/positive mode with a mass (m/z) range of 20 to 4000.

The first bismuth compound may be a mixture of two or more first phosphate esters bonded to bismuth and two or more additional compounds bonded to bismuth. The first bismuth compound preferably includes a first phosphate ester moiety having one (meth)acryloyl group; another first phosphate ester moiety having two (meth)acryloyl groups; and bismuth to which both of the first phosphate ester moieties are bonded. The first bismuth compound with such a structure tends to be highly compatible with a polymerizable compound.

In the first bismuth compound with such a structure, the molar ratio of the first phosphate ester moiety having two (meth)acryloyl groups to the first phosphate ester moiety having one (meth)acryloyl group is preferably 0.05 to 3, more preferably 0.10 to 2, even more preferably 0.15 to 1.

Preferred examples of the first bismuth compound include compounds represented by Formulas (III), (IV), and (V) below.

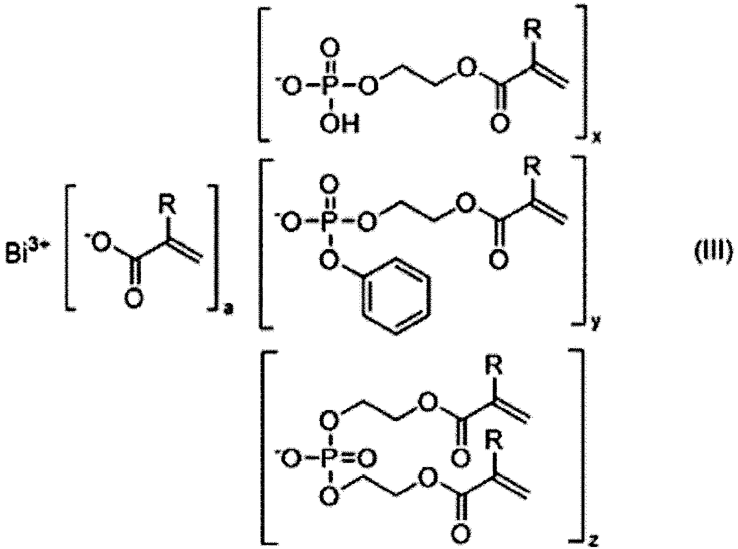

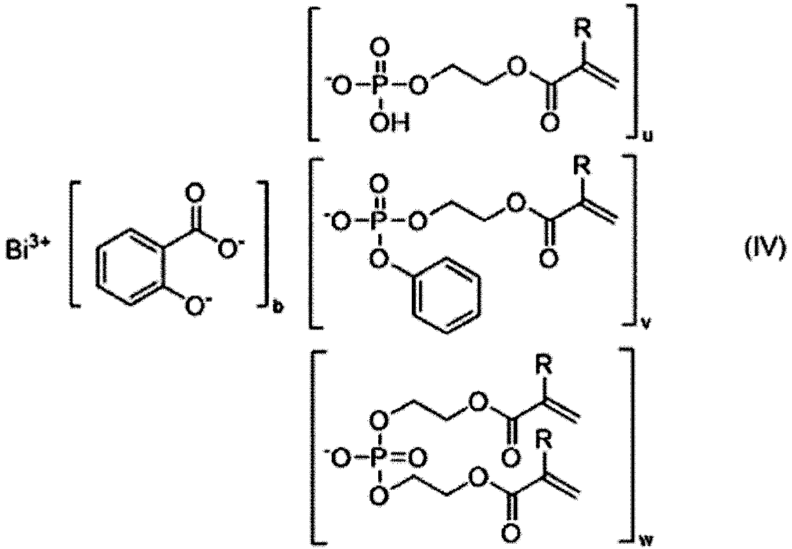

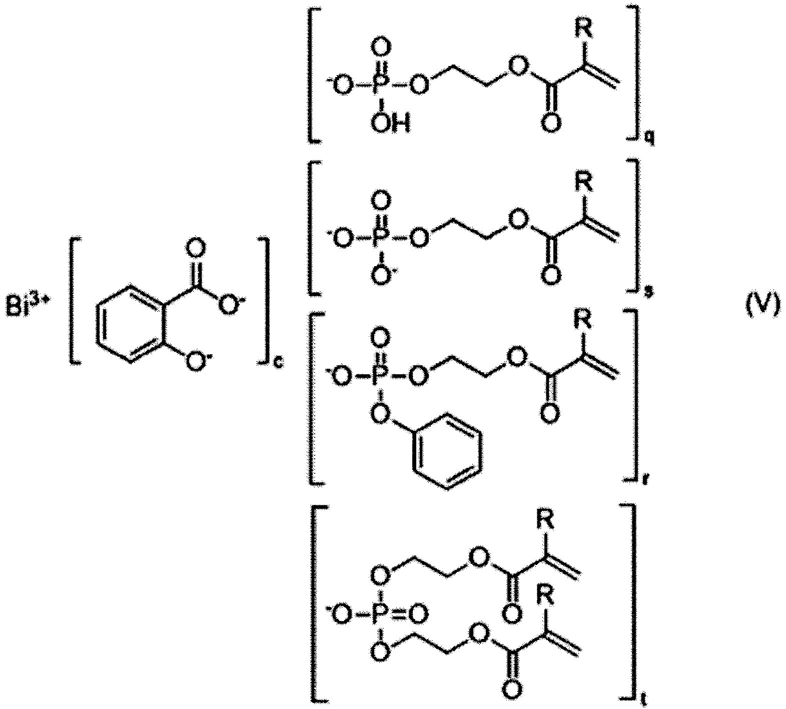

In the formulas, Rs are each independently a hydrogen atom or a methyl group.

In Formula (III), a + x + y + z = 3, x indicates the number of moles of the 2-((meth)acryloyloxy)ethyl hydrogen phosphate residue, y indicates the number of moles of the 2-((meth)acryloyloxy)ethyl phenyl phosphate residue, z indicates the number of moles of the bis[2-((meth)acryloyloxy)ethyl] phosphate residue, and a indicates the number of moles of the (meth)acrylic acid residue.

In Formula (IV), 2b + u + v + w = 3, u indicates the number of moles of the 2-((meth)acryloyloxy)ethyl hydrogen phosphate residue, v indicates the number of moles of the 2-((meth)acryloyloxy)ethyl phenyl phosphate residue, w indicates the number of moles of the bis[2-((meth)acryloyloxy)ethyl] phosphate residue, and b indicates the number of moles of the salicylic acid residue.

In Formula (V), 2c + q + r + 2s + t = 3, q indicates the number of moles of the 2-((meth)acryloyloxy)ethyl hydrogen phosphate residue, r indicates the number of moles of the 2-((meth)acryloyloxy)ethyl phenyl phosphate residue, s indicates the number of moles of the 2-((meth)acryloyloxy)ethyl phosphate residue, t indicates the number of moles of the bis[2-((meth)acryloyloxy)ethyl] phosphate residue, and c indicates the number of moles of the salicylic acid residue.

In this regard, each of Formulas (III) to (V) may represent a mixture of two or more first bismuth compounds rather than a single first bismuth compound. In such a case, the number of moles of each residue defined above indicates the number of moles of each residue in the entire mixture.

For low-temperature production of the first bismuth compound with less coloration, Formula (III) with a = 0 preferably has an x:y:z ratio of 1:0.05-3:0.5-30, more preferably 1:0.1-2:1-20, even more preferably 1:0.15-1:1.5-10. For much less coloration, a may be 0, and y may be 0.

Formula (III) with a being not 0 preferably has an a:(x + y + z) ratio of 0.1-10:1, more preferably 0.1-5:1, even more preferably 0.1-1:1. In this case, the x:y:z ratio is preferably 1:0.05-3:0.5-30, more preferably 1:0.1-2:1-20, even more preferably 1:0.15-1:1.5-10.

When x, y, and z are respectively replaced by u, v, and w, the same description applies to Formula (IV) with b = 0.

In addition, Formula (IV) with b not being 0 preferably has a b: (u + v + w) ratio of 1:0.1-30, more preferably 1:0.2-20, even more preferably 1:0.3-10, furthermore preferably 1:0.5-5. In this case, the u:v:w ratio is preferably 1:0.05-20:0.1-40, more preferably 1:0.1-10:0.2-20, even more preferably 1:0.2-5:0.4-10.

Formula (V) with c = 0 preferably has a q:r:s:t ratio of 1:0.1-50:0.05-20:0.1-40, more preferably 1:0.3-30:0.1-10:0.2-20, even more preferably 1:0.5-20:0.2-5:0.4-10.

Formula (V) with c being not 0 preferably has a c:(q + r + s + t) ratio of 1:0.1-30, more preferably 1:0.2-20, even more preferably 1:0.3-10, furthermore preferably 1:0.5-5. In this case, the q:r:s:t ratio is preferably 1:0.1-50:0.05-20:0.1-40, more preferably 1:0.3-30:0.1-10:0.2-20, even more preferably 1:0.5-20:0.2-5:0.4-10.

The first bismuth compound may be, for example, a phosphate or complex salt represented by Formula (3) below.

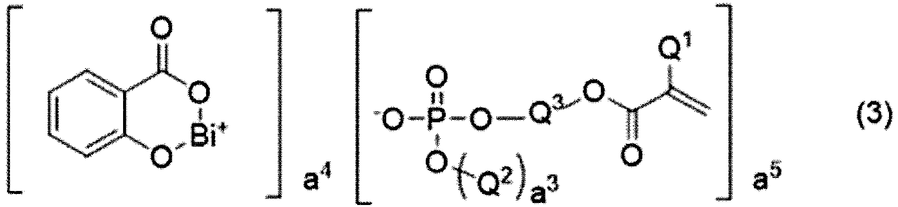

In Formula (3), Q¹, Q², Q³, and a³ are the same as in Formula (2).

In Formula (3), a⁴ is a number of more than 0 and 3 or less, a⁵ is a number of more than 0 and 3 or less, and a⁴ + a⁵ is 3.

The first bismuth compound preferably includes at least one compound selected from the group consisting of compounds represented by Formulas (3a), (3b), (3c), and (3d) below. The first bismuth compound more preferably includes a compound represented by Formula (3a) below.

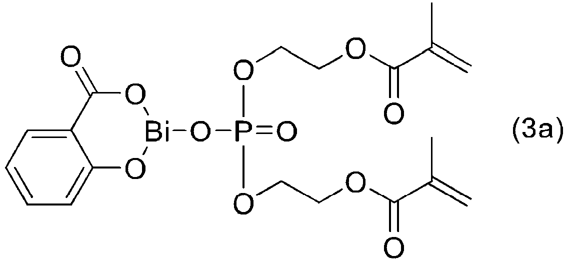

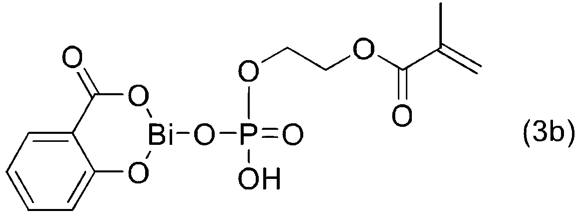

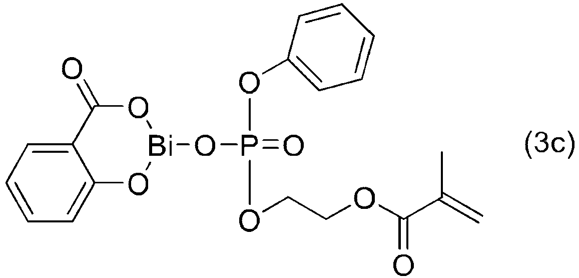

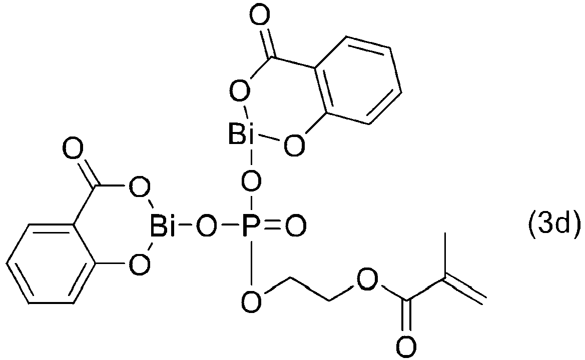

The first bismuth compound may contain, for example, 40 mass% or more and 60 mass% or less, preferably 45 mass% or more and 50 mass% or less of bismuth. The content of bismuth can be determined by ICP emission spectroscopy.

The first bismuth compound may also be a composition including the first bismuth compound and an additional compound other than the first bismuth compound. Hereinafter, such a composition will also be referred to as a first bismuth composition. The first bismuth composition may contain a phosphate compound by-product or an unreacted raw material.

Removing the phosphate compound by-product or unreacted raw material from the first bismuth compound will industrially require a large amount of labor. In addition, the phosphate compound by-product or unreacted raw material can contribute to improving the solubility of the first bismuth compound in a radically polymerizable monomer.

Examples of the phosphate compound by-product include dimers of a phosphate ester with one (meth)acryloyl group (phosphoric monoester), dimers of a phosphate ester with two (meth)acryloyl groups (phosphoric diester), esters of bismuth salicylate or bismuth (meth)acrylate and phosphoric acid, etc.

Examples of the unreacted raw material include a phosphate ester with one (meth)acryloyl group (phosphoric monoester), a phosphate ester with two (meth)acryloyl groups (phosphoric diester), bismuth salicylate, bismuth (meth)acrylate, etc.

The first bismuth composition may contain, for example, 30 mass% or less of the additional compound other than the first bismuth compound. The content of the additional compound in the first bismuth composition may have no lower limit. The lower limit of the additional compound content may be 0 mass% in an example and may be 5 mass% in another example. The additional compound content can be determined by an internal reference method using ¹H NMR to quantify the phosphate compound by-product and the unreacted raw material in the first bismuth composition.

The first bismuth composition may also contain a bismuth oxide-derived compound. For example, the bismuth oxide-derived compound can be produced by a bonding reaction between bismuth oxide and a (meth)acryloyl group-containing phosphate ester, a (meth)acrylic acid, and/or a salicylic acid. The structure of the bismuth oxide-derived compound may have bonds between the hydroxy group on the bismuth oxide surface and the carboxy group of the phosphate ester, (meth)acrylic acid, or salicylic acid, although it still remains to be clarified. The bismuth oxide-derived compound is very difficult to separate from the first bismuth compound. Thus, when the first bismuth composition as produced contains the bismuth oxide-derived compound as a by-product, it should preferably be used as is. The conditions for the production of the first bismuth composition should preferably be controlled to adjust the amount of the bismuth oxide-derived compound by-product within a range where the first bismuth composition can be prevented from having reduced solubility. The presence of the bismuth oxide-derived compound in the composition can be comprehensively determined from the production conditions or the results of IR, NMR, and XPS measurements.

The first bismuth composition may contain at least one compound selected from the group consisting of compounds represented by Formulas (3e) and (3f) below.

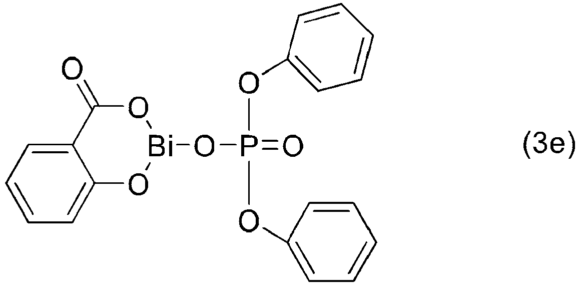

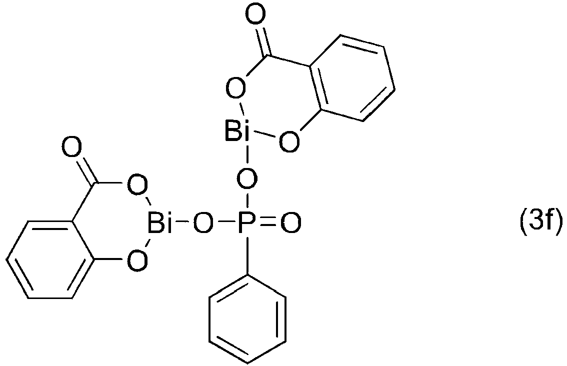

### [Method for Producing First Bismuth Compound]

The first bismuth compound may be produced by any suitable method. Preferably, the first bismuth compound is produced by a method including reacting a first phosphate ester with a second bismuth compound. Specifically, the first bismuth compound is preferably produced by a method including: reacting a first phosphate ester and a second bismuth compound in an aliphatic hydrocarbon solvent or an aromatic solvent optionally in the presence of a polymerization inhibitor; and removing water from the reaction system.

The term "second bismuth compound" refers to a bismuth-containing organic compound. The second bismuth compound may include bismuth (meth)acrylate or bismuth subsalicylate. Bismuth (meth)acrylate or bismuth subsalicylate may be any suitable type, such as a commercially available product.

Bismuth subsalicylate is a compound of Formula (VI) below having bismuth bonded to the salicylic acid-derived moiety.

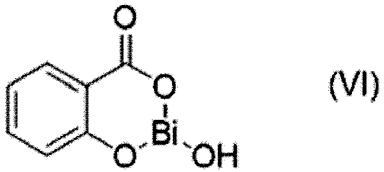

Bismuth subsalicylate may be produced by any suitable method such as a method known in the art.

The first phosphate ester may be a commercially available product. The first phosphate ester may be a phosphate ester having one (meth)acryloyl group, a phosphate ester having two (meth)acryloyl groups, or a mixture of them.

Examples of the phosphate ester having one (meth)acryloyl group include 2-(methacryloyloxy)ethyl dihydrogen phosphate, diphenyl-2-methacryloyloxyethyl phosphate, etc.

Examples of the phosphate ester having two (meth)acryloyl groups include bis[2-(methacryloyloxy)ethyl] hydrogen phosphate, [2-(methacryloyloxy)ethyl] phenyl hydrogen phosphate, etc.

For improved compatibility, the first phosphate ester to be added preferably further includes a phosphate triester, such as diphenyl-2-methacryloyloxyethyl phosphate, bis[2-(methacryloyloxyethyl) phenyl phosphate, or tris[2-(methacryloyloxyethyl) phosphate. Using a phenyl group-containing phosphate triester makes it possible to successfully introduce, into the compounds of Formulas (III) to (V), a monovalent phenyl phosphate diester having one (meth)acryloyl group.

The phosphate triester is preferably used in an amount of 0.1 to 20 moles, more preferably 0.2 to 5 moles, relative to 1 mole of the total amount of the phosphate ester having one (meth)acryloyl group and the phosphate ester having two (meth)acryloyl groups.

The amount of the first phosphate ester to be reacted may be determined such that the desired first bismuth compound can be obtained. Specifically, 1 mole of the second bismuth compound is preferably reacted with 0.3 to 10 moles of the first phosphate ester.

### (Aliphatic Hydrocarbon Solvent or Aromatic Solvent)

When producing the first bismuth compound, the second bismuth compound and the first phosphate ester are preferably mixed and stirred in an aliphatic hydrocarbon solvent or an aromatic solvent for the reaction between them. During the process, water produced in the reaction system is preferably removed therefrom. For easy removal of the produced water, the aliphatic hydrocarbon solvent or the aromatic solvent preferably has a high boiling point, specifically a boiling point of 100°C or more. A mixed solution including a mixture of the aliphatic hydrocarbon solvent and the aromatic solvent may also be used.

Examples of the aliphatic hydrocarbon solvent or the aromatic solvent include hexane, heptane, nonane, decane, undecane, dodecane, xylene, dimethoxybenzene, and isomers thereof; benzene, toluene, chlorobenzene, bromobenzene, anisole; petroleum ether, petroleum benzine, benzoin, etc.

The aliphatic hydrocarbon solvent or the aromatic solvent may be used in any amount sufficient to form a mixture including the second bismuth compound and the first phosphate ester. For high productivity of the first bismuth compound, 5 to 100 mL of the aliphatic hydrocarbon solvent or aromatic solvent is preferably used per 1 g of the second bismuth compound.

### (Reaction Conditions)

Any appropriate method may be used to introduce the second bismuth compound and the first phosphate ester into the reaction system. For example, a method includes adding together the second bismuth compound, optionally diluted with an aliphatic hydrocarbon solvent or aromatic solvent, and the first phosphate ester, optionally diluted with an aliphatic hydrocarbon solvent or aromatic solvent, to the reaction system; and mixing and stirring them. Another method includes preliminarily introducing an aliphatic hydrocarbon solvent or aromatic solvent into the reaction system; then adding together the second bismuth compound, optionally diluted with an aliphatic hydrocarbon solvent or aromatic solvent, and the first phosphate ester, optionally diluted with an aliphatic hydrocarbon solvent or aromatic solvent, to the reaction system; and stirring and mixing them. A further method includes preliminarily introducing one of the materials into the reaction system; then introducing the other material into the reaction system; and stirring and mixing them. In particular, the first bismuth compound is preferably produced using the method described below so that it can be produced with improved productivity and less coloration. First, the second bismuth compound is dispersed in an aliphatic hydrocarbon solvent or aromatic solvent. If the second bismuth compound is insoluble in the solvent in this step, any agglomerates of the second bismuth compound should preferably be crushed using an ultrasonic device or any other device so that no agglomerates remain. To the resulting cloudy solution containing the dispersed second bismuth compound is added the first phosphate ester, and stirring and heating are started.

The materials may be stirred at a temperature (reaction temperature) corresponding to the temperature of reflux of the aliphatic hydrocarbon solvent or aromatic solvent. To produce the first bismuth compound with much less coloration, the materials are preferably stirred at an oil bath temperature of 30 to 150°C, more preferably 40 to 140°C, even more preferably 45 to 120°C.

At a reaction temperature of 30 to 110°C, the reaction system is preferably maintained at a reduced pressure so that the water produced can be removed from the reaction system (dewatering conditions). During this process, the second bismuth compound and the first phosphate ester may be mixed while water is removed, or they may be mixed and then subjected to removal of water. For efficient reaction, they are preferably mixed and then subjected to removal of water during the reaction.

They may be reacted for any suitable period of time. In general, they may be reacted for 1 hour or more and 6 hours or less.

In view of operation, they may be reacted in any of an air atmosphere, an inert gas atmosphere, or a dry air atmosphere. For ease of operation, they are preferably reacted in an air atmosphere.

After the completion of the reaction under the conditions described above, the resulting first bismuth compound is preferably concentrated by removal of the solvent and then subjected to separation of insoluble turbidity components, if any, by filtration or centrifugation. The concentrated reaction solution resulting from this process is then subjected to reprecipitation and purification through adding, to the solution, a solvent that is soluble in the reaction solvent and will not dissolve the first bismuth compound. If a high-boiling point solvent remains, it may be replaced with the precipitation solvent through repeated decantation for the purification. The remaining solvent may then be removed by distillation, which may be followed by vacuum drying to yield the first bismuth compound.

The curable composition has a first bismuth compound content of, for example, 30 mass% or more and 70 mass% or less. With a higher first bismuth compound content, the curable composition will tend to produce a cured product with a higher ability to shield radiation. The curable composition preferably has the first bismuth compound content of 40 mass% or more, more preferably 45 mass% or more. With too high a first bismuth compound content, however, the curable composition may produce a cured product with a reduced antifogging property. The curable composition preferably has the first bismuth compound content of 60 mass% or less, more preferably 55 mass% or less. The first bismuth compound content can be measured using, for example, ¹H NMR spectroscopy.

### <Polymerizable Compound>

The curable composition of the present disclosure contains a first radically polymerizable monomer as a polymerizable compound excluding the first bismuth compound. The first radically polymerizable monomer has a polyethylene glycol chain and a radically polymerizable group. The polyethylene glycol chain is an ethylene oxide unit (EO unit) represented by -(CH₂CH₂O)n-. n is a degree of polymerization.

The radically polymerizable group includes, for example, at least one selected from the group consisting of an (oxy)acryloyl group, an (oxy)methacryloyl group, a vinyl group, and an allyl group. The radically polymerizable group preferably includes at least one selected from the group consisting of an (oxy)acryloyl group and an (oxy)methacryloyl group. A number of the radically polymerizable group may be 1 or more, 2 or more, 3 or more, or 6 or less. The number of radically polymerizable group is preferably 1, 2, or 3, with 1 or 2 being more preferred.

A ratio N2/N1 of a number average molecular weight N2 of the polyethylene glycol chain to a number average molecular weight N1 of the first radically polymerizable monomer is 75% or more and 95% or less. With a higher N2/N1 ratio, the curable composition will tend to produce a cured product with a higher antifogging property. The ratio N2/N1 is preferably 80% or more, more preferably 85% or more, even more preferably 90% or more. The ratio N2/N1 can be calculated, for example, from NMR spectroscopy and a structural formula of the first radically polymerizable monomer. Hereinafter, the ratio N2/N1 is also referred to as an EO ratio.

A number average molecular weight N1 means a molecular weight of the first radically polymerizable monomer. The number average molecular weight N1 of the first radically polymerizable monomer is, for example, 400 or more and 3000 or less. The number average molecular weight N1 is preferably 500 or more and 1500 or less, more preferably 600 or more and 1400 or less, even more preferably 800 or more and 1300 or less. The number average molecular weight N1 can be calculated, for example, from NMR spectroscopy and a structural formula of the first radically polymerizable monomer.

A number average molecular weight N2 means a molecular weight of a polyethylene glycol chain moiety in a first radically polymerizable monomer. The number average molecular weight N2 of the polyethylene glycol chain moiety in the first radically polymerizable monomer is, for example, 350 or more and 2200 or less, preferably 400 or more and 1500 or less, more preferably 500 or more and 1200 or less. The number average molecular weight N2 can be calculated, for example, from NMR spectroscopy and a structural formula of the first radically polymerizable monomer.

A degree of polymerization of the polyethylene glycol chain in the first radically polymerizable monomer is, for example, 8 or more and 50 or less, preferably 10 or more and 30 or less, more preferably 12 or more and 25 or less. The degree of polymerization can be calculated, for example, from NMR spectroscopy and a structural formula of the first radically polymerizable monomer.

The first radically polymerizable monomer preferably includes (meth)acrylate represented by Formula (I) below.

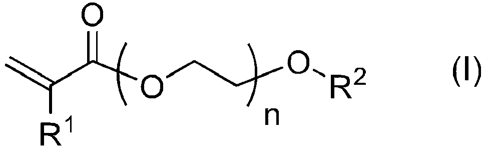

In Formula (I) above, R¹ is a hydrogen atom or a methyl group. When R¹ is a hydrogen atom, that is, the first radically polymerizable monomer is acrylate, the curable composition will tend to produce a cured product with a higher antifogging property. When R¹ is a methyl group, that is, the first radically polymerizable monomer is methacrylate, the curable composition will tend to produce a cured product with higher hardness.

R² is an acryloyl group, a methacryloyl group, a methyl group, or a phenyl group. When R² is an acryloyl group or a methacryloyl group, that is, the first radically polymerizable monomer is a bifunctional (meth)acrylate, the curable composition will tend to produce a cured product with higher hardness. When R² is a methyl group or a phenyl group, that is, the first radically polymerizable monomer is a monofunctional (meth)acrylate, the curable composition will tend to produce a cured product with a higher antifogging property.

n means a degree of polymerization and is an integer of 10 or more and 30 or less. From the viewpoint of increasing an antifogging property of the cured product, n is preferably 12 or more, more preferably 13 or more, even more preferably 20 or more. From the viewpoint of increasing hardness of the cured product, n is preferably 25 or less, more preferably 20 or less, even more preferably 15 or less.

The first radically polymerizable monomer preferably includes at least one selected from the group consisting of a monofunctional acrylate, a bifunctional acrylate, a monofunctional methacrylate, and a bifunctional methacrylate, and may include two or more thereof, or three or more thereof.

Specific examples of the monofunctional acrylate include at least one selected from the group consisting of methoxy polyethylene glycol acrylate, phenoxydiethylene glycol acrylate, and ethoxylated-O-phenylphenol acrylate.

Specific examples of the monofunctional methacrylate include at least one selected from the group consisting of methoxy polyethylene glycol methacrylate, phenoxydiethylene glycol methacrylate, and ethoxylated-O-phenylphenol methacrylate.

Specific examples of a diacrylate include at least one selected from the group consisting of polyethylene glycol diacrylate, ethoxylated glycerol diacrylate, and pentaerythritol diacrylate.

Specific examples of a dimethacrylate include at least one selected from the group consisting of polyethylene glycol dimethacrylate, ethoxylated glycerol dimethacrylate, and pentaerythritol dimethacrylate.

The curable composition has a first radically polymerizable monomer content of, for example, 15 mass% or more. From the viewpoint of increasing an antifogging property, the content is preferably 17 mass% or more, more preferably 20 mass% or more, even more preferably 25 mass% or more. From the viewpoint of increasing hardness of the cured product, the content is preferably 50 mass% or less, more preferably 40 mass% or less, even more preferably 30 mass% or less. The content can be determined using, for example, ¹H NMR spectroscopy.

When the first radically polymerizable monomer includes a bifunctional radically polymerizable monomer and a monofunctional radically polymerizable monomer, the curable composition preferably has a content of the bifunctional radically polymerizable monomer of 1 mass% or more, more preferably 5 mass% or more, even more preferably 10 mass% or more from the viewpoint of increasing hardness of the cured product. From the viewpoint of increasing an antifogging property of the cured product, the content is preferably 30 mass% or less, more preferably 20 mass% or less, even more preferably 15 mass% or less. The curable composition preferably has a content of the monofunctional radically polymerizable monomer of 1 mass% or more, more preferably 5 mass% or more, even more preferably 10 mass% or more from the viewpoint of increasing an antifogging property of the cured product. From the viewpoint of increasing hardness of the cured product, the content is preferably 30 mass% or less, more preferably 20 mass% or less, even more preferably 15 mass% or less.

The curable composition preferably has a ratio M1/M2 of the mass M1 of the first bismuth compound to the mass M2 of the first radically polymerizable monomer of 1 or more and 10 or less. With a higher M1/M2 ratio, the curable composition will tend to produce a cured product with a higher ability to shield radiation. With a lower M1/M2 ratio, the curable composition will provide a higher antifogging property for the first bismuth compound. The ratio M1/M2 is preferably 2 or more and 5 or less.

The curable composition has a polyurethane glycol chain content, i.e., EO content of 13.5 mass% or more. The polyethylene glycol chain is mainly derived from the first radically polymerizable monomer. The curable composition preferably has a content of the polyethylene glycol chain of 13.6 mass% or more, more preferably 14.0 mass% or more, further preferably 16.0 mass% or more, particularly preferably 18.0 mass% or more, and extremely preferably 20.0 mass% or more from the viewpoint of increasing an antifogging property of the cured product. From the viewpoint of increasing hardness of the cured product, the content is preferably 40.0 mass% or less, more preferably 30.0 mass% or less, even more preferably 25.0 mass% or less. The content is obtained, for example, by multiplying the content of the first radically polymerizable monomer in the curable composition by the EO ratio of the first radically polymerizable monomer.

The curable composition of the present disclosure may contain a second radically polymerizable monomer in addition to the first radically polymerizable monomer. The second radically polymerizable monomer is a radically polymerizable monomer having no ethylene glycol chains and having a radically polymerizable group.

The radically polymerizable group includes, for example, at least one selected from the group consisting of an (oxy)acryloyl group, an (oxy)methacryloyl group, a vinyl group, and an allyl group. The radically polymerizable group preferably includes at least one selected from the group consisting of an (oxy)acryloyl group and an (oxy)methacryloyl group. A number of the radically polymerizable group may be 1 or more, 2 or more, 3 or more, or 6 or less. The number of radically polymerizable group is preferably 1, 2, or 3, with 1 or 2 being more preferred.

A number average molecular weight of the second radically polymerizable monomer is, for example, 100 or more and 2000 or less. The number average molecular weight is preferably 120 or more and 1500 or less, more preferably 130 or more and 1000 or less, even more preferably 140 or more and 500 or less. The number average molecular weight can be calculated, for example, from NMR spectroscopy and a structural formula of the second radically polymerizable monomer.

The second radically polymerizable monomer preferably includes a compound represented by Formula (II) below.

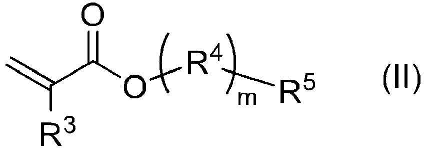

In Formula (II) above, R³ is a hydrogen atom or a methyl group. When R³ is a hydrogen atom, that is, the second radically polymerizable monomer is acrylate, the curable composition will tend to produce a cured product with a higher antifogging property. When R³ is a methyl group, that is, the second radically polymerizable monomer is methacrylate, the curable composition will tend to produce a cured product with higher hardness.

R⁴ is an alkylene group having 1 or more and 5 or less carbon atoms. R⁴ is preferably a methylene group or an ethylene group.
m is 0 or 1.

R⁵ is an alkyl group having 1 or more and 5 or less carbon atoms, a phenyl group, a dimethylamino group, a diethylamino group, an acryloyloxy group, or a methacryloyloxy group. When R⁵ is an acryloyloxy group or a methacryloyloxy group, that is, the second radically polymerizable monomer is a bifunctional (meth)acrylate, the curable composition will tend to produce a cured product with higher hardness. When R⁵ is another group, that is, the second radically polymerizable monomer is a monofunctional (meth)acrylate, the curable composition will tend to produce a cured product with a higher antifogging property.

The second radically polymerizable monomer preferably includes at least one selected from the group consisting of a monofunctional acrylate, a bifunctional acrylate, a monofunctional methacrylate, and a bifunctional methacrylate, and may include two or more thereof, or three or more thereof.

Specific examples of the monofunctional acrylate include at least one selected from the group consisting of 2-(dimethylamino)ethyl acrylate, acrylic acid, acrylamide, phenyl acrylate, benzyl acrylate, isobutyl acrylate, methoxyethyl acrylate, ethoxyethyl acrylate, tetrahydrofurfuryl acrylate, isocyanatoethyl acrylate, and acryloxymethyltrimethoxysilane.

Specific examples of the monofunctional methacrylate include at least one selected from the group consisting of 2-(dimethylamino)ethyl methacrylate, methacrylic acid, methacrylamide, phenyl methacrylate, benzyl methacrylate, isobutyl methacrylate, methoxyethyl methacrylate, ethoxyethyl methacrylate, tetrahydrofurfuryl methacrylate, isocyanatoethyl methacrylate, and netacryloxymethyltrimethoxysilane.

Specific examples of the diacrylate include at least one selected from the group consisting of ethylene glycol diacrylate, propylene glycol diacrylate, and tetramethylene glycol diacrylate.

Specific examples of the dimethacrylate include at least one selected from the group consisting of ethylene glycol dimethacrylate, propylene glycol dimethacrylate, and tetramethylene glycol dimethacrylate.

The curable composition has a content of the second radically polymerizable monomer of, for example, 10 mass% or more and 40 mass% or less. From the viewpoint of increasing hardness, the content is preferably 15 mass% or more, more preferably 20 mass% or more, even more preferably 25 mass% or more. From the viewpoint of increasing an antifogging property of the cured product, the content is preferably 35 mass% or less, more preferably 33 mass% or less, even more preferably 30 mass% or less. The content can be determined using, for example, ¹H NMR spectroscopy.

The curable composition preferably has a ratio M1/M3 of the mass M1 of the first bismuth compound to the mass M3 of the second radically polymerizable monomer of 0.5 or more and 10 or less. With a higher M1/M3 ratio, the curable composition will tend to produce a cured product with a higher ability to shield radiation. With a lower M1/M3 ratio, the curable composition will provide higher formability for the first bismuth compound. The ratio M1/M3 is more preferably 1 or more and 5 or less.

The curable composition preferably has a ratio M2/M3 of the mass M2 of the first radically polymerizable monomer to the mass M3 of the second radically polymerizable monomer of 0.1 or more and 10 or less. With a higher M2/M3 ratio, the curable composition will tend to produce a cured product with a higher antifogging property. With a lower M2/M3 ratio, the curable composition will provide higher formability for the first bismuth compound. The ratio M2/M3 is more preferably 0.2 or more and 2 or less, even more preferably 0.5 or more and 1 or less.

The curable composition of the present disclosure may contain an additional polymerizable compound in addition to the first radically polymerizable monomer and the second radically polymerizable monomer. Examples of the additional polymerizable compound include a vinyl group-containing compound, an allyl group-containing compound, etc.

Examples of the vinyl group-containing polymerizable compound include vinylpyridine, vinylpyrrolidone; methylstyrene and structural isomers thereof, methoxystyrene and structural isomers thereof, methylstyrene dimers, chlorostyrene, bromostyrene, divinylbenzene, other styrene derivatives; etc.

Examples of the allyl group-containing polymerizable compound include allyl methyl carbonate, allyl phenyl ether, 4-allyloxytoluene, allyloxytrimethylsilane, allyl benzoate, allyl methacrylate, allyl glycidyl ether, etc.

The curable composition of the present disclosure may contain 10 mass% or less of a nitrile compound. The curable composition preferably has a nitrile compound content of 5 mass% or less, more preferably 3 mass% or less, even more preferably 1 mass% or less. With a lower nitrile compound content, the curable composition will tend to produce a cured product with a lower level of odor. The nitrile compound content in the curable composition may have a lower limit of 100 ppm by mass or more in an example and may have a lower limit of 0 mass% in another example. The nitrile compound content can be measured using, for example, ¹H NMR spectroscopy.

Examples of the nitrile compound include acrylonitrile, methacrylonitrile, crotononitrile, 2-chloroacrylonitrile, 2-cyanoethyl acrylate, allyl cyanide, allyl cyanoacetate, fumaronitrile, and 5-norbornene-2-carbonitrile.

### <Other additives>

The curable composition of the present disclosure may contain a known additive, a coordinating organic compound, or a terpene in addition to the first bismuth compound and the polymerizable compound.

Examples of the known additive include a radical polymerization initiator, an antioxidant, a mold release agent for increasing mold releasability, a colorant for adjusting the cured product color, a chain transfer agent for controlling polymerization performance, a plasticizer for forming a cured product with enhanced plasticity, heat resistance, or cold resistance, an antioxidizing agent for durability improvement, and an age resister.

These additives can be included to the extent that they do not interfere with the effect. For example, the curable composition preferably contains 0 to 30 parts by mass, more preferably 0.01 to 20 parts by mass, even more preferably 0.02 to 15 parts by mass of each additive, based on 100 parts by mass of the total amount of the first bismuth compound and the polymerizable compound.

The curable composition of the present disclosure can be produced by mixing the first bismuth compound, the polymerizable compound, and optionally various additives.

### [Coordinating Organic Compound]

The coordinating organic compound is capable of coordinating with bismuth and can function as an odor suppressant and a viscosity adjuster for the cured product.

The coordinating organic compound preferably has an acid dissociation constant pKa of 2.0 or more and 15.0 or less. The coordinating organic compound with an acid dissociation constant pKa within this range will tend to form a curable composition capable of producing a cured product with a low yellowness index and less odor. The acid dissociation constant pKa of the coordinating organic compound may be 3 or more, 4 or more, or 6 or more. The acid dissociation constant pKa of the coordinating organic compound may be 14 or less, 11 or less, or 10 or less. The acid dissociation constant pKa refers to that in water. For example, the acid dissociation constant pKa can be determined by titration experiments or calculated by assuming state conditions. Specifically, the acid dissociation constant pKa may be the result of calculation using Software V11.02 (ACD/Labs) shown in SciFinder-n. For unified calculation of the physical property indicator, each compound may be assumed to be in water.

The coordinating organic compound preferably has a molecular weight (relative molecular mass) of 17 or more and 400 or less. The coordinating organic compound with a molecular weight within this range would easily coordinate with bismuth. The coordinating organic compound more preferably has a molecular weight of 18 or more and 300 or less, even more preferably 28 or more and 200 or less.

The coordinating organic compound preferably has a boiling point at 1 atm of 20°C or more and 500°C or less. The coordinating organic compound with a boiling point within this range will tend to form a curable composition capable of producing a cured product with a lower level of odor. The coordinating organic compound more preferably has a boiling point of 30°C or more and 400°C or less, even more preferably 120°C or more and 360°C or less.

The curable composition has a ratio M1/M4 of the mass M1 of the first bismuth compound to the mass M4 of the coordinating organic compound of, for example, 4 or more and 4990 or less. With a higher M1/M4 ratio, the curable composition will tend to produce a cured product with a higher ability to shield radiation. With a lower M1/M4 ratio, the curable composition will tend to produce a cured product with less odor. The ratio M1/M4 is preferably 10 or more and 700 or less, more preferably 15 or more and 300 or less, even more preferably 20 or more and 100 or less. The ratio can be determined using, for example, ¹H NMR spectroscopy.

With a higher coordinating organic compound content, the curable composition will tend to easily produce a cured product with less odor. The coordinating organic compound content is preferably 0.1 mass% or more, more preferably 0.5 mass% or more, even more preferably 1.0 mass% or more. With too high a coordinating organic compound content, however, the curable composition may produce a cured product with a reduced ability to shield radiation. The coordinating organic compound content is preferably 20 mass% or less, more preferably 10 mass% or less, even more preferably 5 mass% or less.

Examples of the coordinating organic compound include an imidazole skeleton-containing compound, a pyrazole skeleton-containing compound, a triazole skeleton-containing compound, a tetrazole skeleton-containing compound, a compound having an unsaturated bond and at least one heteroatom selected from the group consisting of nitrogen, oxygen, and sulfur, an unsaturated dicarboxylic acid, an unsaturated carboxylic acid ester, an unsaturated carboxylic acid anhydride, etc. It should be noted that the coordinating organic compound should not be counted as the polymerizable compound even though it has a radically polymerizable group such as a (meth)acryloyl group.

The coordinating organic compound preferably includes at least one selected from the group consisting of an imidazole skeleton-containing compound, a pyrazole skeleton-containing compound, a triazole skeleton-containing compound, and a tetrazole skeleton-containing compound.

The imidazole skeleton-containing compound has a skeleton represented by Formula (a) below.

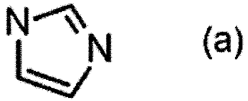

For example, the imidazole skeleton-containing compound includes at least one compound selected from the group consisting of imidazole, 1-vinylimidazole, 1-allylimidazole, N-acetylimidazole, benzimidazole, 1-methylimidazole, 1-ethylimidazole, 1-propylimidazole, 1-cyanomethylimidazole, 1-(3-aminopropyl)imidazole, 2-methylimidazole, 2-methyl-1-vinylimidazole, 2-hydroxymethy-l-methylimidazole, 4-hydroxymethyl-5-methylimidazole, 2-formyl-1-vinylimidazole, 2-ethylimidazole, 2-propylimidazole, 2-chloroimidazole, 2-nitroimidazole, 4-nitroimidazole, 4-methylimidazole, 4-fluoroimidazole, 2-formylimidazole, 2-ethyl-4-imidazole, 4-formylimidazole, 4-ethylimidazole, 4-cyanomethylimidazole, 2-imidazolecarboxylic acid, 4-imidazolecarboxylic acid, 1-isopropylimidazole, 2-isopropylimidazole, and 1,2-dimethylimidazole. The imidazole skeleton-containing compound preferably includes at least one compound selected from the group consisting of imidazole, 1-vinylimidazole, 1-allylimidazole, 2-methylimidazole, N-acetylimidazole, trimethylsilylimidazole, and 1,2-dimethylimidazole, and more preferably includes imidazole.

The pyrazole skeleton-containing compound has a skeleton represented by Formula (b) below.

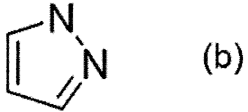

For example, the pyrazole skeleton-containing compound includes at least one compound selected from the group consisting of pyrazole, 1-methylpyrazole, 1-ethylpyrazole, 1-isopropylpyrazole, 1-nitropyrazole, 3-methylpyrazole, 3-aminopyrazole, 3-nitropyrazole, 4-methylpyrazole, 4-aminopyrazole, 4-chloropyrazole, 4-nitropyrazole, 3-amino-1-methylpyrazole, 3-amino-5-methylpyrazole, 3-amino-5-hydroxypyrazole, 5-amino-1-methylpyrazole, 5-hydroxy-1-methylpyrazole, 1,2-dihydropyrazole-3-one, 3-formylpyrazole, 1,3-dimethylpyrazole, 1,5-dimethylpyrazole, 3,5-dimethylpyrazole, 3-amino-4-cyanopyrazole, 4-formyl-1-methylpyrazole, 1,3,5-trimethylpyrazole, 5-amino-1,3-dimethylpyrazole, 5-amino-1-ethylpyrazole, pyrazole-4-carboxylic acid, pyrazole-3-carboxylic acid, and 5-(hydroxymethyl)-1-methylpyrazole. The pyrazole skeleton-containing compound preferably includes pyrazole.

The term "triazole skeleton-containing compound" includes a compound having a 1,2,3-triazole skeleton and a compound having a 1,2,4-triazole skeleton.

The compound having a 1,2,3-triazole skeleton has a skeleton represented by Formula (c) below.

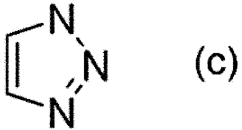

Examples of the compound having a 1,2,3-triazole skeleton include at least one selected from the group consisting of 1,2,3-triazole, 1H-benzotriazole, and 2H-benzotriazole. The compound having a 1,2,3-triazole skeleton preferably includes 1,2,3-triazole.

The compound having a 1,2,4-triazole skeleton has a skeleton represented by Formula (d) below.

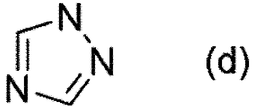

For example, the compound having a 1,2,4-triazole skeleton includes at least one compound selected from the group consisting of 1,2,4-triazole, 3-methyl-1H-1,2,4-triazole, 3-amino-1,2,4-triazole, 4-amino-1,2,4-triazole, 1-hydroxymethyl-1,2,4-triazole, 3,5-dimethyl-1,2,4-triazole, 3,5-amino-1,2,4-triazole, and methyl 1,2,4-triazole-3-carboxylate. The compound having a 1,2,4-triazole skeleton preferably includes 1,2,4-triazole.

The tetrazole skeleton-containing compound has a skeleton represented by Formula (e) below.

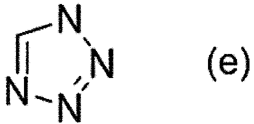

For example, the tetrazole skeleton-containing compound includes at least one compound selected from the group consisting of tetrazole, 1-methyl-1H-tetrazole, 5-methyltetrazole, 5-amino-1H-tetrazole, 5-amino-1-methyltetrazole, and 5-(2-pyridyl)-1H-tetrazole. The tetrazole skeleton-containing compound preferably includes tetrazole.

For example, the coordinating organic compound may include a compound having an unsaturated bond and at least one heteroatom selected from the group consisting of nitrogen, oxygen, and sulfur. This type of coordinating organic compound typically has 1 or more and 5 or less heteroatoms, preferably one or two heteroatoms. This type of coordinating organic compound includes at least one compound selected from the group consisting of the imidazole skeleton-containing compounds listed above, allyl isonicotinate, 2-dimethylaminoethyl acrylate, 2-dimethylaminoethyl methacrylate, indole, carbazole, 1,2-benzoisothiazol-3(2H)-one, heliotropin, allyl cyanurate, triallyl isocyanurate, triallylamine, 2-(tert-butylamino)ethyl acrylate, and 2-(tert-butylamino)ethyl methacrylate.

For example, the coordinating organic compound may include an unsaturated dicarboxylic acid. Examples of the unsaturated dicarboxylic acid include maleic acid, fumaric acid, citraconic acid, mesaconic acid, 2-pentenedioic acid, methylene succinic acid, allylmalonic acid, isopropylidene succinic acid, 2,4-hexadienedioic acid, acetylene dicarboxylic acid, etc. The unsaturated dicarboxylic acid preferably includes maleic acid.

For example, the coordinating organic compound may include an unsaturated carboxylic acid ester. Examples of the unsaturated carboxylic acid ester include 2-dimethylaminoethyl acrylate, 2-dimethylaminoethyl methacrylate, diallyl maleate, etc. The unsaturated carboxylic acid ester preferably includes at least one compound selected from the group consisting of 2-dimethylaminoethyl acrylate and 2-dimethylaminoethyl methacrylate.

For example, the coordinating organic compound may include an unsaturated carboxylic acid anhydride. Examples of the unsaturated carboxylic acid anhydride include methacrylic anhydride, maleic anhydride, etc.

Preferred examples of the coordinating organic compound include at least one compound selected from the group consisting of imidazole, 1-vinylimidazole, 1-allylimidazole, N-acetylimidazole, trimethylsilylimidazole, pyrazole, triazole, 1H-tetrazole, 1,2,3-benzotriazole, benzimidazole, allyl isonicotinate, 2-dimethylaminoethyl acrylate, 2-dimethylaminoethyl methacrylate, 2-[2-hydroxy-5-[2-(methacryloyloxy)ethyl]phenyl]-2H-benzotriazole, indole, carbazole, 2-methylimidazole, 4-methylimidazole, 1,2-benzoisothiazol-3(2H)-one, 2-isopropylimidazole, 1,2-dimethylimidazole, l-menthol, heliotropin, triallyl cyanurate, triallyl isocyanurate, triallylamine, 2-(tert-butylamino)ethyl acrylate, 2-(tert-butylamino)ethyl methacrylate, 4-acryloylmorpholine, triacryloylhexahydrotriazine, dimethylpyrazole, linalool, camphor, acrylic acid, methacrylic acid, maleic acid, acrylic anhydride, methacrylic anhydride, and maleic anhydride.

The coordinating organic compound preferably includes at least one compound selected from the group consisting of imidazole, 2-methylimidazole, 1-vinylimidazole, 2-dimethylaminoethyl acrylate, 2-dimethylaminoethyl methacrylate, triallylamine, and maleic anhydride.

In this regard, the carboxylic acid anhydride may be used as a precursor of the carboxylic acid. The acid dissociation constant pKa of the carboxylic acid anhydride may be assumed to be that of the corresponding carboxylic acid.

The coordinating organic compound preferably includes a first coordinating organic compound and a second coordinating organic compound different from the first coordinating organic compound. The curable composition containing two or more different coordinating organic compounds can have further reduced odor due to the synergistic effect of the coordinating organic compounds.

The coordinating organic compound preferably includes: an imidazole skeleton-containing compound; and at least one compound selected from the group consisting of a pyrazole skeleton-containing compound, a triazole skeleton-containing compound, a tetrazole skeleton-containing compound, a compound having an unsaturated bond and at least one heteroatom selected from the group consisting of nitrogen, oxygen, and sulfur, an unsaturated dicarboxylic acid, an unsaturated carboxylic acid ester, and an unsaturated carboxylic acid anhydride. The curable composition containing the imidazole skeleton-containing compound will tend to have low viscosity and high handleability.

The mixture of two or more coordinating organic compounds preferably has an imidazole skeleton-containing compound content of 10 mass% or more, more preferably 25 mass% or more, even more preferably 40 mass% or more. The imidazole skeleton-containing compound content may be 90 mass% or less in an example and may be 60 mass% or less in another example.

The coordinating organic compound preferably includes: an unsaturated carboxylic acid anhydride; and at least one compound selected from the group consisting of an imidazole skeleton-containing compound, a pyrazole skeleton-containing compound, a triazole skeleton-containing compound, a tetrazole skeleton-containing compound, a compound having an unsaturated bond and at least one heteroatom selected from the group consisting of nitrogen, oxygen, and sulfur, an unsaturated dicarboxylic acid, and an unsaturated carboxylic acid ester. The unsaturated carboxylic acid anhydride will tend to provide an increased water absorption capacity.

The mixture of two or more coordinating organic compounds preferably has an unsaturated carboxylic acid anhydride content of 10 mass% or more, more preferably 25 mass% or more, even more preferably 40 mass% or more. The unsaturated carboxylic acid anhydride content may be 90 mass% or less in an example and may be 60 mass% or less in another example.

The coordinating organic compound preferably includes both an imidazole skeleton-containing compound and an unsaturated carboxylic acid anhydride. The coordinating organic compound may only include an imidazole skeleton-containing compound and an unsaturated carboxylic acid anhydride, or may further include an additional coordinating organic compound in addition to them.

### [Terpene]

Terpenes include terpene and its derivatives and can function as odor suppressants for the cured product. Terpene is a hydrocarbon composed of isoprene units.

In the curable composition, the terpene may include at least one compound selected from the group consisting of a semiterpene, a semiterpene derivative, a monoterpene, a monoterpene derivative, a sesquiterpene, and a sesquiterpene derivative. The terpene preferably includes at least one compound selected from the group consisting of a monoterpene, a monoterpene derivative, a sesquiterpene, and a sesquiterpene derivative, and more preferably includes at least one compound selected from the group consisting of a monoterpene and a monoterpene derivative. Each of the derivatives may have a functional group, such as a hydroxy group or a carbonyl group.

The terpene preferably includes at least one compound selected from the group consisting of a monocyclic monoterpene, a monocyclic monoterpene derivative, a bicyclic monoterpene, and a bicyclic monoterpene derivative. The curable composition containing one or more of these monoterpenes will tend to produce a cured product with much less odor.

Specific examples of the terpene include at least one compound selected from the group consisting of (-)-α-pinene, (-)-β-pinene, (±)-camphene, α-terpinene, limonene, phenetole, p-cymene, terpinolene, 1,8-cineole, linalool, (+)-camphor, l-menthol, d-menthol, 1,4-cineole, norpinene, α-phellandrene, fenchone, borneol, and citronellol.

The terpene preferably includes at least one selected from the group consisting of (-)-α-pinene, (-)-β-pinene, (±)-camphene, α-methylstyrene, α-terpinene, limonene, phenetole, p-cymene, terpinolene, 1,8-cineole, linalool, (+)-camphor, and l-menthol. The terpene more preferably includes at least one selected from the group consisting of (-)-α-pinene, (-)-β-pinene, (±)-camphene, α-methylstyrene, limonene, phenetole, p-cymene, linalool, and (+)-camphor.

The terpene preferably has a boiling point at 1 atm of 95°C or more and 250°C or less. The curable composition containing the terpene with a boiling point within this range will tend to produce a cured product with much less odor. The terpene more preferably has a boiling point of 100°C or more and 220°C or less, even more preferably 150°C or more and 210°C or less. The boiling point of the terpene can be measured using, for example, a boiling point meter.

The curable composition has a ratio M1/M5 of the mass M1 of the first bismuth compound to the mass M5 of the terpene of, for example, 4 or more and 4990 or less. With a higher M1/M5 ratio, the curable composition will tend to produce a cured product with a higher ability to shield radiation. With a lower M1/M5 ratio, the curable composition will tend to produce a cured product with less odor. The ratio M1/M5 is preferably 10 or more and 700 or less, more preferably 15 or more and 300 or less, even more preferably 20 or more and 100 or less. The ratio can be determined using, for example, ¹H NMR spectroscopy.

With a higher terpene content, the curable composition will tend to easily produce a cured product with less odor. The terpene content of the curable composition is preferably 0.1 mass% or more, more preferably 0.5 mass% or more, even more preferably 1.0 mass% or more. With too high a terpene content, however, the curable composition may produce a cured product with a reduced ability to shield radiation. The terpene content of the curable composition is preferably 20 mass% or less, more preferably 10 mass% or less, even more preferably 5 mass% or less. The content can be determined using, for example, ¹H NMR spectroscopy.

### <Method for Producing Cured Product>

A cured product may be produced by curing the curable composition of the present disclosure using any known method. Specifically, the cured product may be produced using one or both of photopolymerization and thermal polymerization methods. What is a preferred polymerization method may be determined depending on the radical polymerization initiator, which is added as needed to the curable composition.

### <Physical Properties of Cured Product>

The cured composition of the present disclosure may produce a cured product containing a high concentration of bismuth, which has excellent radiation shielding performance against X-rays and the like, while being highly transparent, highly flexible, and less colored. When 2 mm-thick, for example, the cured product obtained by curing the curable composition will have a transmittance of 80% or more at a wavelength of 560 nm, X-ray shielding performance equivalent to or more than that of a 0.02 mm-thick lead foil, and a yellowness index of 40 or less.

The cured product may have a bismuth content of 5 to 40 mass% based on the total mass of the cured product, which is normalized to 100 mass%. The curable composition preferably has the bismuth content of 20 mass% or more, more preferably 25 mass% or more. The bismuth content in a cured product (resin composition) can be measured, for example, by fluorescent X-ray analysis.

The cured product may be a resin composition including bismuth, a (meth)acrylic resin, and 16.0 mass% or more of a polyethylene glycol chain. The polyethylene glycol chain constitutes a part of the (meth)acrylic resin. The resin composition may have a content of the polyethylene glycol chain of 17.0 mass% or more or 19.0 mass% or more. The content of the polyethylene glycol chain in the resin composition may have no upper limit. The upper limit of the content may be 30.0 mass% or less in an example and may be 25.0 mass% or less in another example. The content of the polyethylene glycol chain in the resin composition can be measured, for example, by NMR spectroscopy.

### <Uses of Cured Product>

The cured product obtained by curing the curable compositions of the present disclosure is transparent and less colored and thus may be used as an optical article. The cured product has an ability to shield radiation, even though transparent to visible light, and thus may be used as a transparent radiation-shield material. Moreover, the cured product can be produced in the form of a flexible sheet with a large area, which can be easily shaped depending on the intended use or target.

The optical article including the cured product of the present disclosure may be used as a radiation shielding window material, a radiation shielding lens, or a sheet for radiation protection curtains.

The lens or sheet including the cured product of the present disclosure may be used to form radiation shielding eyeglasses, radiation shields, or other products.

The cured product of the present disclosure has antibacterial and antiviral properties and thus may be used for applications requiring high hygiene.

### EXAMPLES

Hereinafter, the present invention will be described in detail with reference to some examples and comparative examples. It will be understood that the examples below are not intended to limit the present invention.

### <Example 1>

### (Production of First Bismuth Compound)

A 1000 mL eggplant flask was charged with 94.27 g of bismuth(III) subsalicylate (containing 260.35 mmol of bismuth, manufactured by Sigma-Aldrich), 33.06 g of a mixture of bis[2-(methacryloyloxyethyl)] phosphate (a phosphate diester) and (2-methacryloyloxyethyl) phosphate (a phosphate monoester) (the mixture was MR-200 manufactured by DAIHACHI Chemical Industry with a phosphate value of 162.04 mmol), 33.09 g of diphenyl-2-methacryloyloxyethyl phosphate (a phosphate triester) (MR-260 manufactured by DAIHACHI Chemical Industry, 91.33 mmol), 6.17 g of dibutylhydroxytoluene (BHT) (a polymerization inhibitor) (special grade reagent manufactured by FUJIFILM Wako Pure Chemical), and 750 mL of toluene. The materials were subjected to ultrasonic dispersion using a bath sonicator to form a cloudy solution.

The resulting cloudy solution was transferred to a 1000 mL four-necked flask equipped with a Dean-Stark trap and then subjected to reaction in an oil bath at 130°C with heating and stirring while the water produced was removed from the system. The reaction endpoint was determined when no more water was produced. The reaction product was a pale yellow turbid solution with a slight amount of pale yellow precipitates.

The solution was concentrated to 250 mL using a vacuum evaporator. To the concentrate was added 8 g of alumina powder and allowed to stand overnight. The mixture was then subjected to suction filtration using 5B filter paper. To the resulting pale yellow turbid filtrate was added 3 g of activated carbon (Darco G60 manufactured by Norit), and the mixture was centrifuged at 23830 × g for 8 hours. The resulting supernatant was filtered under pressure through a 0.2 µm pore size membrane filter to give a pale yellow transparent filtrate. The solvent was removed from the resulting solution using a vacuum evaporator, and the residue was redissolved in 250 mL of acetone. To the resulting pale yellow solution was added 3 g of activated carbon (Norit SX-Plus manufactured by Norit), and the mixture was centrifuged at 23830 × g for 12 hours. The resulting supernatant was filtered under pressure through a 0.2 µm pore size membrane filter to give a pale yellow transparent filtrate. The resulting filtrate was concentrated to 100 mL using a vacuum evaporator. An acetone solution of the concentrate was added under stirring to 800 mL of hexane in a 1000 mL conical beaker. The resulting white precipitate was separated by suction filtration using 5B filter paper. The resulting solid was dried under vacuum. As a result, 64.40 g of a first bismuth compound (phosphate ester-bonded bismuth-containing composition) was obtained as a white powder.

### (Analysis of First Bismuth Compound)

IR measurement of the first bismuth compound was performed using a Fourier transform infrared spectrophotometer (Spectrum One manufactured by PerkinElmer). The IR measurement was performed under the conditions of single reflection ATR and a number of scans of 4. As a result, a peak was observed at 1697 cm⁻¹ in the resulting spectrum of the first bismuth compound.

MALDI-TOF-MS measurement of the first bismuth compound was performed using rapiflex TOF/TOF manufactured by Bruker. The matrix was prepared using CHCA (α-cyano-4-hydroxycinnamic acid), DIT (dithranol), and DHB (2,5-dihydroxybenzoic acid), and the cationizing agent was sodium trifluoroacetate. The measurement was performed under the conditions of reflector/positive mode and mass range m/z = 20-4000. As a result, the compounds of Formulas (3a), (3b), and (3f) were identified.

### (Bismuth Content in First Bismuth compound)

A bismuth content in the first bismuth compound was measured by ICP emission spectroscopy. As a result, the bismuth content was 46 mass%.

### (Preparation of Curable Composition)

First, 52 parts by mass of the first bismuth compound obtained as described above, 16 parts by mass of methoxy polyethylene glycol methacrylate (M-130G) with a degree of polymerization of an ethylene glycol chain of 13, 24.8 parts by mass of methoxyethyl methacrylate (MEMA), and 6 parts by mass of 2-(dimethylamino)ethyl methacrylate (DMAEMA) were mixed together. To the resulting mixture were added 0.9 parts by mass of imidazole (IMD), 0.3 parts by mass of a methyl styrene dimer (MSD), and 0.01 parts by mass of a modified silicone oil (KF353A), and were uniformly dissolved to form a curable composition. From the curable composition, the dissolved oxygen was removed under reduced pressure using a vacuum pump. The curable composition has an ethylene glycol chain content, that is, an EO content of 13.6 mass% or more.

### (Production of Cured Product)

The resulting curable composition was then injected into a 3 mm-thick space between two glass sheets (110 mm × 300 mm) fixed and spaced apart with 3 mm-square silicone resin cords and subjected to a polymerization process including: heating it to a maximum temperature of 90°C over 15 hours; and holding it at 90°C for 2 hours to form a pale yellow transparent cured product.

### <Examples 2 to 12 and Comparative Examples 1 to 3>

Cured products were produced in the same manner as in Example 1, except that formulation of curable compositions was changed as shown in Table 1. For Comparative Examples 2 and 3, 0.9 parts by mass of the methylstyrene dimer (MSD) was incorporated.

Materials listed in Table 1 are summarized below.

### (First Radically Polymerizable Monomer)

M-130G: Methoxypolyethylene glycol methacrylate with a degree of polymerization of an ethylene glycol chain of 13, a number average molecular weight N1 of 673, and an ethylene glycol chain content (EO ratio) of 85%
M-230G: Methoxypolyethylene glycol methacrylate with a degree of polymerization of an ethylene glycol chain of 23, a number average molecular weight N1 of 1113, and an ethylene glycol chain content (EO ratio) of 91%
A-1000: Polyethylene glycol diacrylate with a degree of polymerization of an ethylene glycol chain of 23, a number average molecular weight N1 of 1139, and an ethylene glycol chain content (EO ratio) of 89%
9G: Polyethylene glycol dimethacrylate with a degree of polymerization of an ethylene glycol chain of 9, a number average molecular weight N1 of 551, and an ethylene glycol chain content (EO ratio) of 72%
14G: Polyethylene glycol dimethacrylate with a degree of polymerization of an ethylene glycol chain of 14, a number average molecular weight N1 of 771, and an ethylene glycol chain content (EO ratio) of 80%
23G: Polyethylene glycol dimethacrylate with a degree of polymerization of an ethylene glycol chain of 23, a number average molecular weight N1 of 1167, and an ethylene glycol chain content (EO ratio) of 87%
AM-130G: Methoxypolyethylene glycol acrylate with a degree of polymerization of an ethylene glycol chain of 13, a number average molecular weight N1 of 659, and an ethylene glycol chain content (EO ratio) of 88%

### (Second Radically Polymerizable Monomer)

MEMA: Methoxyethyl methacrylate
DMAEMA: 2-(dimethylamino)ethyl methacrylate
THFAA: Tetrahydrofurfuryl acrylate

### <Evaluation test>

### [Impact Resistance test]

A falling-ball test was performed to evaluate the resulting cured products for impact resistance. First, a support ring made of NBR was joined to a tube with an inner diameter of 25 mm, an outer diameter of 32 mm, and a height of 25 mm. The support ring had a thickness of 3 mm and an inner diameter of 25 mm. The cured product was placed on this support ring. Steel balls were dropped onto the cured product from a height of 1.27 m using a dropping device with an electromagnet. Weights of the steel balls were 4.5 g, 6.9 g, 14 g, 16 g, 32 g, 50 g, 67 g, 80 g, 95 g, 112 g, 130 g, 151 g, 174 g, 198 g, 225 g, and 261 g. The steel balls were dropped in order from lightest to heaviest, and a weight of the steel ball immediately preceding the one that cracked or ruptured the cured product was determined as the maximum impact resistance value. This test was performed three times and the average value was used as the maximum impact resistance of the cured product. The results are shown in Table 1.

### [Measurement of Shore D hardness]

The cured product was measured for Shore D hardness in accordance with JIS K 7215. The measurement device used was a digital durometer (DD4 manufactured by Kobunshi Keiki) attached to a motorized constant loader (CLE-150 manufactured by Kobunshi Keiki), in which the needle was dropped at a speed of 1 cm/second when the value was read. The measurement was performed three times, and the average value was used as the Shore D hardness of the cured product. The results are shown in Table 1.

### [Refrigeration Test]

The cured product was left to stand in a thermostatic chamber at 4°C for 30 minutes. The cured product was then removed from the thermostatic chamber to a room at 25°C and visually observed for the presence or absence of fogging on a surface of the cured product, which was classified into the following three levels. The results are shown in Table 1.

### -Evaluation criteria-

1: Fogging was not observed.
2: Fogging was observed on a portion of the surface of the cured product after removal, but the fogging disappeared after a few seconds.
3: Fogging was observed over the entire surface of the cured product after removal, and the fogging did not disappear even after the cured product was left to stand for 1 minute.

### [Fogging Disappearance Test]

The cured product was tested for disappearance of fogging as described below. First, a steam generator was prepared. The steam generator includes a water chamber, a tank located inside the water chamber and storing water, a first piping that connects the air (external atmosphere) to water in the tank (aqueous phase portion), and a second piping that connects a headspace of the tank (vapor phase portion) to the air (external atmosphere). Air was blown into distilled water at 50°C stored in the tank at a flow rate of 1.0 mL/min via the first piping to generate steam in the tank. This steam was discharged into the air via the second piping. The cured product was placed 1 cm away from the steam outlet and exposed to the steam for 1 second. After 1 second, the steam outlet was blocked and the time for fogging of the cured product to disappear was measured. This test was performed ten times and the average value was used as a fogging disappearance time of the cured product. The results are shown in Table 1.

**[Table 1]**

| | Curable Composition | | | | | | | Cured product | | | |
|---|---|---|---|---|---|---|---|---|---|---|---|
| | First radically polymerizable monomer | | | Second radically polymerizable monomer | | First bismuth compound | EO content (wt%) | Maximum impact resistance (g) | Shore D hardness | Refrigeration test | Fogging disappearance time (sec) |
| | Type | EO ratio (%) | Incorporated amount (wt%) | Type | Incorporated amount (wt%) | Incorporated amount (wt%) | | | | | |
| Example 1 | M-130G | 85 | 16 | MEMA | 24.8 | 52 | 13.6 | 10.25 | 63.0 | 2 | 5.16 |
| | | | | DMAEMA | 6.0 | | | | | | |
| Example 2 | M-230G | 91 | 16 | MEMA | 24.8 | 52 | 14.6 | 5.7 | 62.1 | 1 | 2.55 |
| | | | | DMAEMA | 6.0 | | | | | | |
| Example 3 | A-1000 | 89 | 16 | MEMA | 24.8 | 52 | 14.2 | 88 | 58.5 | 1 | 1.21 |
| | | | | DMAEMA | 6.0 | | | | | | |
| Example 4 | 14G | 80 | 18 | MEMA | 22.8 | 52 | 14.4 | 41.5 | 64.2 | 2 | 7.11 |
| | | | | DMAEMA | 6.0 | | | | | | |
| Example 5 | 23G | 87 | 16 | MEMA | 24.8 | 52 | 13.9 | 32 | 60.6 | 1 | 3.79 |
| | | | | DMAEMA | 6.0 | | | | | | |
| Example 6 | 23G | 87 | 22 | MEMA | 18.8 | 52 | 19.1 | 243 | 59.2 | 1 | 2.52 |
| | | | | DMAEMA | 6.0 | | | | | | |
| Example 7 | 23G | 87 | 28 | MEMA | 12.8 | 52 | 24.3 | 261 | 56.7 | 1 | 0.81 |
| | | | | DMAEMA | 6.0 | | | | | | |
| Example 8 | 23G | 87 | 10 | MEMA | 24.8 | 52 | 14.0 | 112 | 61.3 | 1 | 3.21 |
| | A-1000 | 89 | 6 | DMAEMA | 6.0 | | | | | | |
| Example 9 | 23G | 87 | 10 | MEMA | 18.8 | 52 | 19.4 | 261 | 55.5 | 1 | 1.35 |
| | A-1000 | 89 | 12 | DMAEMA | 6.0 | | | | | | |
| Example 10 | 23G | 87 | 16 | MEMA | 18.8 | 52 | 19.2 | 261 | 58.9 | 1 | 1.24 |
| | A-1000 | 89 | 6 | DMAEMA | 6.0 | | | | | | |
| Example 11 | 23G | 87 | 16 | MEMA | 12.8 | 52 | 24.6 | 261 | 52.8 | 1 | 0.86 |
| | A-1000 | 89 | 12 | DMAEMA | 6.0 | | | | | | |
| Example 12 | 23G | 87 | 10 | MEMA | 24.8 | 52 | 13.8 | 41 | 59.0 | 1 | 1.60 |
| | AM-130G | 88 | 6 | DMAEMA | 6.0 | | | | | | |
| Comparative Example 1 | 9G | 72 | 18 | MEMA | 22.8 | 52 | 13.0 | 10.5 | 68.6 | 3 | 9.43 |
| | | | | DMAEMA | 6.0 | | | | | | |
| Comparative Example 2 | 9G | 72 | 22.2 | MEMA | 14.6 | 40 | 15.8 | 130 | 52.2 | 3 | 8.95 |
| | | | | THFAA | 21.4 | | | | | | |
| Comparative Example 3 | M-230G | 91 | 10 | MEMA | 30.8 | 52 | 9.1 | 4.5 | 69.4 | 3 | 12.02 |
| | | | | DMAEMA | 6.0 | | | | | | |

As shown in Table 1, each of the curable compositions of Examples 1 to 12, which included the first bismuth compound and the first radically polymerizable monomer having a polyethylene glycol chain content (EO ratio) of 75% or more and 95% or less and had a polyethylene glycol chain content (EO content) of 13.5 mass% or more, was able to successfully produce a cured product with an antifogging property.

Preferred embodiments will be appended below.
[1] A curable composition including:
   a first bismuth compound having bismuth and at least one selected from the group consisting of an acryloyl group and a methacryloyl group; and
   a first radically polymerizable monomer having a polyethylene glycol chain and a ratio N2/N1 of a number average molecular weight N2 of the polyethylene glycol chain to a number average molecular weight N1 of the first radically polymerizable monomer of 75% or more and 95% or less,
   the curable composition including 13.5 mass% or more of the polyethylene glycol chain.
[2] The curable composition according to [1], in which the ratio N2/N1 is 85% or more and 95% or less.
[3] The curable composition according to [1] or [2], in which the first radically polymerizable monomer has the number average molecular weight N1 of 500 or more and 1500 or less.
[4] The curable composition according to any one of [1] to [3], in which the curable composition includes 15 mass% or more of the first radically polymerizable monomer.
[5] The curable composition according to any one of [1] to [4], in which the first radically polymerizable monomer is a monofunctional (meth)acrylate.
[6] The curable composition according to any one of [1] to [5], in which the first radically polymerizable monomer includes (meth)acrylate represented by Formula (I) below: 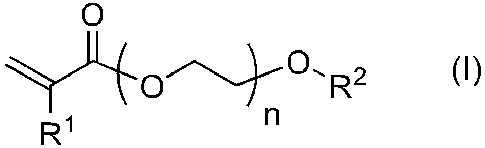 in which
   R¹ is a hydrogen atom or a methyl group;
   R² is an acryloyl group, a methacryloyl group, a methyl group, or a phenyl group; and
   n is an integer of 10 or more and 30 or less.
[7] The curable composition according to any one of [1] to [6], in which the curable composition includes 30 mass% or more and 70 mass% or less of the first bismuth compound.
[8] The curable composition according to any one of [1] to [7], further including a second radically polymerizable monomer having no polyethylene glycol chain.
[9] The curable composition according to [8], in which the second radically polymerizable monomer includes a compound represented by Formula (II) below: 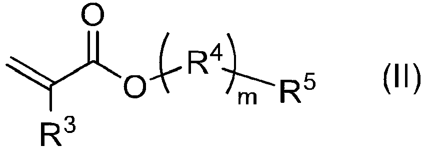 in which
   R³ is a hydrogen atom or a methyl group;
   R⁴ is an alkylene group having 1 or more and 5 or less carbon atoms;
   R⁵ is an alkyl group having 1 or more and 5 or less carbon atoms, a phenyl group, a dimethylamino group, a diethylamino group, an acryloyloxy group, or a methacryloyloxy group; and m is 0 or 1.
[10] The curable composition according to [8] or [9], in which the curable composition includes 10 mass% or more and 40 mass% or less of the second radically polymerizable monomer.
[11] The curable composition according to any one of [1] to [10], in which the curable composition includes 13.6 mass% or more and 30.0 mass% or less of the polyethylene glycol chain.
[12] A cured product including a product resulting from curing of the curable composition according to any one of [1] to [11].
[13] An optical article including the cured product according to [12].
[14] A lens including the cured product according to [12].
[15] A rubber sheet including the cured product according to [12].
[16] An eye protector including the cured product according to [12].
[17] An antimicrobial and antiviral agent including the cured product according to [12].
[18] A resin composition including:
   bismuth;
   a (meth)acrylic resin; and
   16.0 mass% or more of a polyethylene glycol chain.

## Claims

1. A curable composition comprising:
a first bismuth compound having bismuth and at least one selected from the group consisting of an acryloyl group and a methacryloyl group; and
a first radically polymerizable monomer having a polyethylene glycol chain and a ratio N2/N1 of a number average molecular weight N2 of the polyethylene glycol chain to a number average molecular weight N1 of the first radically polymerizable monomer of 75% or more and 95% or less,
the curable composition comprising 13.5 mass% or more of the polyethylene glycol chain.

2. The curable composition according to claim 1, wherein the ratio N2/N1 is 85% or more and 95% or less.

3. The curable composition according to claim 1, wherein the first radically polymerizable monomer has the number average molecular weight N1 of 500 or more and 1500 or less.

4. The curable composition according to claim 1, wherein the curable composition comprises 15 mass% or more of the first radically polymerizable monomer.

5. The curable composition according to claim 1, wherein the first radically polymerizable monomer is a monofunctional (meth)acrylate.

6. The curable composition according to claim 1, wherein the first radically polymerizable monomer comprises (meth)acrylate represented by Formula (I) below: 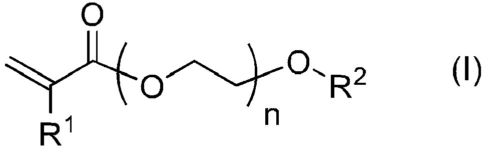 wherein
R¹ is a hydrogen atom or a methyl group;
R² is an acryloyl group, a methacryloyl group, a methyl group, or a phenyl group; and
n is an integer of 10 or more and 30 or less.

7. The curable composition according to claim 1, wherein the curable composition comprises 30 mass% or more and 70 mass% or less of the first bismuth compound.

8. The curable composition according to claim 1, further comprising a second radically polymerizable monomer having no polyethylene glycol chain.

9. The curable composition according to claim 8, wherein the second radically polymerizable monomer comprises a compound represented by Formula (II) below: 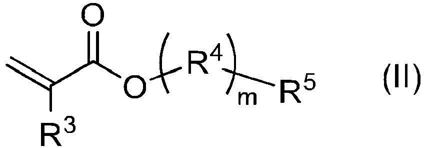 wherein
R³ is a hydrogen atom or a methyl group;
R⁴ is an alkylene group having 1 or more and 5 or less carbon atoms;
R⁵ is an alkyl group having 1 or more and 5 or less carbon atoms, a phenyl group, a dimethylamino group, a diethylamino group, an acryloyloxy group, or a methacryloyloxy group; and
m is 0 or 1.

10. The curable composition according to claim 8, wherein the curable composition comprises 10 mass% or more and 40 mass% or less of the second radically polymerizable monomer.

11. The curable composition according to claim 1, wherein the curable composition comprises 13.6 mass% or more and 30.0 mass% or less of the polyethylene glycol chain.

12. A cured product comprising a product resulting from curing of the curable composition according to any one of claims 1 to 11.

13. An optical article comprising the cured product according to claim 12.

14. A lens comprising the cured product according to claim 12.

15. A rubber sheet comprising the cured product according to claim 12.

16. An eye protector comprising the cured product according to claim 12.

17. An antibacterial or antiviral agent comprising the cured product according to claim 12.

18. A resin composition comprising:
bismuth;
a (meth)acrylic resin; and
16.0 mass% or more of a polyethylene glycol chain.
